# EUROPÄISCHE PATENTANMELDUNG

(11) **EP 4 600 509 A1**
(43) Veröffentlichungstag der Anmeldung: **13.08.2025**
(21) Anmeldenummer: 24156884.9
(22) Anmeldetag: 09.02.2024
(51) Int. Cl.: F16B 7/04

(54) **VERBINDUNGSELEMENT**

(71) Anmelder: Geberit International AG, 8645 Jona (CH)
(72) Erfinder: GUBELMANN, Silvan, 8645 Jona (CH); LECHNER, Manuel, 8645 Jona (CH); WEBER, Lothar, 8645 Jona (CH)
(74) Vertreter: Frischknecht, Harry Ralph

(57) **Zusammenfassung**

Ein Verbindungselement (1) umfasst
einen Supportabschnitt (2) mit einer Oberseite (3) und einer Unterseite (4),
einen Verbindungsabschnitt (5), welcher auf der Oberseite (3) am Supportabschnitt (2) angeformt ist, und
eine erste Raststruktur (6) und eine zweite Raststruktur (7), welche auf der Unterseite (4) am Supportabschnitt (2) angeformt sind,
wobei der Verbindungsabschnitt (5) zur Befestigung eines Montageelements (8) am Verbindungselement (1) ausgebildet ist, und
wobei die erste Raststruktur (6) unterschiedlich zur zweiten Raststruktur (7) ausgebildet ist, derart, dass die erste Raststruktur (6) zur Verbindung mit einem ersten Profilelement (P1) und die zweite Raststruktur (7) zur Verbindung mit einem zweiten Profilelement (P2) ausgebildet ist.

## Beschreibung

### TECHNISCHES GEBIET

Die vorliegende Erfindung betrifft ein Verbindungselement nach Anspruch 1 sowie eine Montageanordnung nach Anspruch 15.

### STAND DER TECHNIK

Aus dem Stand der Technik sind Montagevorrichtungen zur Befestigung von Sanitärartikeln bekannt geworden. Derartige Montagevorrichtungen werden meist hinter einer Vorwand fest installiert und dienen der Lagerung von Sanitärartikeln, wie Spülkästen, Toilettenschüsseln, Urinale, Armaturen, Waschbacken, Steuerungselemente, Elektroelemente etc. Beispielsweise offenbart die EP 2 662 502 eine solche Montagevorrichtung.

### DARSTELLUNG DER ERFINDUNG

Der vorliegenden Anmeldung liegt eine Aufgabe zugrunde, ein Verbindungselement für eine sanitäre Montagestruktur anzugeben, welches flexibler einsetzbar ist.

Diese und andere Aufgaben löst das Verbindungselement nach Anspruch 1. Demgemäss umfasst ein Verbindungselement einen Supportabschnitt mit einer Oberseite und einer Unterseite, einen Verbindungsabschnitt, welcher auf bzw. an der Oberseite am Supportabschnitt angeformt ist, und eine erste Raststruktur sowie eine zweite Raststruktur, welche auf bzw. an der Unterseite am Supportabschnitt angeformt sind. Der Verbindungsabschnitt ist zur Befestigung eines Montageelements ausgebildet. Die erste Raststruktur ist unterschiedlich zur zweiten Raststruktur ausgebildet, derart, dass die erste Raststruktur zur Verbindung mit einem ersten Profilelement und die zweite Raststruktur zur Verbindung mit einem zweiten Profilelement ausgebildet ist.

Dieses Verbindungselement weist den Vorteil auf, dass das Verbindungselement aufgrund der beiden unterschiedlich zueinander ausgebildeten Raststrukturen mit zwei verschiedenen Profilelementen verbunden werden kann. Somit kann das gleiche Verbindungselement vielfältiger eingesetzt werden. Der Installateur kann somit mit dem gleichen Verbindungselement unterschiedliche Montagearten ausführen.

Ein weiterer Vorteil ist, dass die Lagerhaltung einfacher wird, weil für mehrere Profilelemente nur noch ein einziges Verbindungselement vorzuhalten ist.

Die Profilelemente sind in ihrer Form mindestens in dem Bereich, in welchem die Raststrukturen eingreifen, unterschiedlich zueinander ausgebildet.

Die Raststrukturen und die Profilelemente sind dabei derart ausgebildet, dass ein formschlüssiger und/oder ein kraftschlüssiger Eingriff zwischen dem Verbindungselement und dem jeweiligen Profilelement bereitgestellt werden kann.

Vorzugsweise weist die erste Raststruktur ein Paar von ersten Rastelementen auf. Die beiden ersten Rastelemente liegen beabstandet zueinander. Vorzugsweise weist die zweite Raststruktur ein Paar von zweiten Rastelementen auf. Die beiden zweiten Rastelemente liegen beabstandet zueinander.

Vorzugsweise weisen die ersten Rastelemente und/oder die zweiten Rastelemente mindestens eine Rastausnehmung auf.

Die Rastausnehmung ist dabei so ausgebildet, dass Teile von den besagten Profilelementen in die Rastausnehmung einragen.

Vorzugsweise erstrecken sich die Rastausnehmungen der ersten Rastelemente entlang einer ersten Achse und die Rastausnehmungen der zweiten Rastelemente erstrecken sich entlang einer zweiten Achse. Die ersten Achsen verlaufen in einem Winkel im Bereich von 45° bis 135°, insbesondere in einem Winkel von 90°, zu den zweiten Achsen.

Das heisst für den Einbau, dass das Verbindungselement je nach Profil entsprechend ausgerichtet werden muss. Das heisst, das Verbindungselement muss je nach Profil um den besagten Winkel verschwenkt werden.

Vorzugsweise ist die erste Raststruktur bezüglich der zweiten Raststruktur derart angeordnet ist, dass die Orientierung des Verbindungselements bei der Verbindung mit dem ersten Profileelement bezüglich einer durch das erste Profilelement definierten ersten Profilachse unterschiedlich zur Orientierung des Verbindungselements bei der Verbindung mit dem zweiten Profilelement bezüglich einer durch das zweite Profilelement definierten zweiten Profilachse ist.

Vorzugsweise erstrecken sich von der Unterseite zwei beabstandet zueinander liegende und parallel zueinander verlaufende Stege weg, wobei die Stege jeweils eine Aussenseite und eine Innenseite aufweisen. Die erste Raststruktur und die zweite Raststruktur sind an diesen Stegen angeordnet.

Vorzugsweise ist in einer Variante der Bereich zwischen den Stegen als freier Zwischenraum ausgebildet. In einer anderen Variante kann der Bereich zwischen den Stegen auch mit einer Materialerhebung von der Unterseite ausgefüllt sein. Eine solche Materialerhebung kann den Bereich beispielsweise vollständig ausfüllen.

Die Aussenseiten der beiden Stege sind in einer ersten Variante einander abgewandt und liegt die jeweils eines der zweiten Rastelemente an der Aussenseite des jeweiligen Stegs.

Das heisst, die Rastelemente liegen aussenseitig zu den Rastelementen.

In einer anderen Variante liegen die zweiten Rastelemente an der Innenseite des jeweiligen Stegs.

Jeder der Stege weist mindestens einen sich von der Aussenseite zur Innenseite durch den Steg hindurch erstreckenden Durchbruch auf, wobei eines der ersten Rastelemente im besagten Durchbruch angeordnet ist.

Jeder der Stege weist gegenüber des mindestens einen Durchbruchs eine Stirnseite auf, wobei eines der ersten Rastelemente an der besagten Stirnseite angeordnet ist.

Besonders bevorzugt ist eines der zweiten Rastelemente am besagten Durchbruch und das andere der zweiten Rastelemente an der besagten Stirnseite angeordnet.

Vorzugsweise weist jeder der Stege eine Lagerfläche auf, wobei von der Lagerfläche optionale Rastnocken abstehen, und wobei die Lagerfläche bevorzugt parallel zur Unterseite verläuft.

Vorzugsweise weist der Supportabschnitt einen Fortsatz auf, der sich vorzugsweise fluchtend bezüglich der Oberseite und der Unterseite erstreckt, wobei im besagten Fortsatz mindestens ein sich von der Oberseite zur Unterseite erstreckenden Durchbruch aufweist.

Somit liegt der Durchbruch beabstandet zum Verbindungsabschnitt und zu den beiden Raststrukturen liegt. Der Durchbruch dient der Aufnahme einer Befestigungsschraube, mit welcher das Verbindungselement zum jeweiligen Profilelement oder zu einer Gebäudestruktur, wie einer Wand oder einem Boden befestigt werden kann.

Vorzugsweise befindet sich der Durchbruch zwischen den Stegen.

Vorzugsweise ist der Abstand der Stege im Bereich des Durchbruchs kleiner oder grösser, als in dem Bereich, in welchem die Rastelemente angeordnet sind. Der Abstand kann in anderen Varianten auch gleich gross sein.

Vorzugsweise erstreckt sich der Fortsatz seitlich vom Verbindungsabschnitt und von den beiden genannten Raststrukturen weg. Von oben auf die Oberseite bzw. von unten auf die Unterseite betrachtet heisst dies, dass der Fortsatz und der Durchbruch seitlich neben dem Verbindungsabschnitt und neben den Raststrukturen liegen.

Vorzugsweise liegen die beiden genannten Raststrukturen unterhalb des Verbindungsabschnitts. Mit anderen Worten gesagt liegt der Verbindungsabschnitt über den Raststrukturen. Das heisst, die Raststrukturen und der Verbindungsabschnitt liegen in einem geometrischen Hüllzylinder, vorzugsweise mit rechteckigem Querschnitt. Die Zylinderachse des geometrischen Hüllzylinder erstreckt sich rechtwinklig zur Oberseite bzw. zur Unterseite.

Vorzugsweise weist der Verbindungsabschnitt vier in einem Rechteck angeordnete Verbindungslaschen auf. Beispielsweise definieren die Aussenseiten der Verbindungslaschen den genannten geometrischen Hüllzylinder. Vorzugsweise liegen die Raststrukturen innerhalb dieses Zylinders.

Vorzugsweise ist das Verbindungselement einstückig ausgebildet, insbesondere, dass die genannten Raststrukturen integral am Supportabschnitt angeformt sind. Somit kann ein Verbindungselement mit einer einfachen Raststruktur geschaffen werden.

Vorzugsweise sind die genannten Raststrukturen elastisch federnd und/oder plastisch verformbar ausgebildet. Das heisst, dass bei Einrastvorgang der Raststrukturen am Profilelement die Raststrukturen für den Zweck des Eingriffs elastisch und/oder plastisch verformt werden.

Vorzugsweise besteht das Verbidnungselement aus einem Kunststoff oder aus einem Zinkdruckguss hergestellt. Besonders bevorzugt besteht das Verbindungselement ausschliesslich aus einem Kunststoff oder aus einem Zinkdruckguss.

Vorzugsweise umfasst das Verbindungselement keine beweglichen Teile, wie Hebel und dergleichen.

Vorzugsweise weist jede oder einige der Verbindungslaschen eine Gewindeöffnung auf, welche der Aufnahme einer Befestigungsschraube dient, derart, dass das Montageelement mit dem Verbindungselement verbindbar ist.

Eine Montageanordnung umfasst ein Verbindungselement nach obiger Beschreibung mindestens ein Profilelement nach einer ersten Art, wobei das Profilelement mindestens eine erste Auskragung aufweist, wobei das Verbindungselement mit der ersten Raststruktur mit der ersten Auskragung am Profilelement der ersten Art verrastend verbindbar ist; oder mindestens ein Profilelement nach einer zweiten Art, wobei das Profilelement mindestens eine zweite Auskragung aufweist, wobei das Verbindungselement mit der zweiten Raststruktur mit der zweiten Auskragung am Profilelement der zweiten Art verrastend verbindbar ist.

Vorzugsweise weist jedes der Profile einen Basisschenkel und zwei beabstandet zueinander liegende Seitenschenkel, die vom Basisschenkel abstehen, auf. Jeweils eine der jeweiligen Auskragungen ist an jedem der Seitenschenkel angeordnet und die Auskragungen ragen in den Zwischenraum zwischen den Seitenschenkeln ein.

Vorzugsweise ist die erste Auskragung von der zweiten Auskragung unterschiedlich. Die erste und/oder die zweite Auskragung können elastisch und/oder plastisch verformbar sein.

Vorzugsweise umfasst die Montageanordnung weiterhin ein Montageelement, welches mit dem Verbindungsabschnitt in Verbindung steht, wobei das Montageelement vorzugsweise als Stütze ausgebildet ist, und wobei das Montageelement vorzugsweise Befestigungsstrukturen zur Befestigung von mindestens einem Sanitärartikel aufweist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht von Teilen einer erfindungsgemässen Montageanordnung nach einer bevorzugten Ausführungsform;
- Fig. 2: eine weitere perspektivische Ansicht nach Figur 1;
- Fig. 3: eine Frontansicht eines Verbindungselements für die Montageanordnung nach Figuren 1 oder 2;
- Fig. 4: eine Seitenansicht des Verbindungselements nach Figur 3;
- Fig. 5: eine perspektivische Ansicht des Verbindungselements nach Figur 3 von oben;
- Fig. 6: eine perspektivische Ansicht des Verbindungselements nach Figur 3 von unten;
- Fig. 7a: eine perspektivische Ansicht von Teilen einer erfindungsgemässen Montageanordnung mit einem Verbindungselement der vorhergehenden Figuren und einem ersten Profilelement;
- Fig. 7b: eine Seitenansicht der Figur 7a während der Verbindung des Verbindungselements mit dem Profilelement;
- Fig. 7c: eine Seitenansicht der Figur 7a nach der Verbindung des Verbindungselements mit dem Profilelement;
- Fig. 8a: eine perspektivische Ansicht von Teilen einer erfindungsgemässen Montageanordnung mit einem Verbindungselement der vorhergehenden Figuren und einem zweiten Profilelement;
- Fig. 8b: eine Seitenansicht der Figur 8a während der Verbindung des Verbindungselements mit dem Profilelement; und
- Fig. 8c: eine Seitenansicht der Figur 8a nach der Verbindung des Verbindungselements mit dem Profilelement.

### BESCHREIBUNG BEVORZUGTER AUSFÜHRUNGSFORMEN

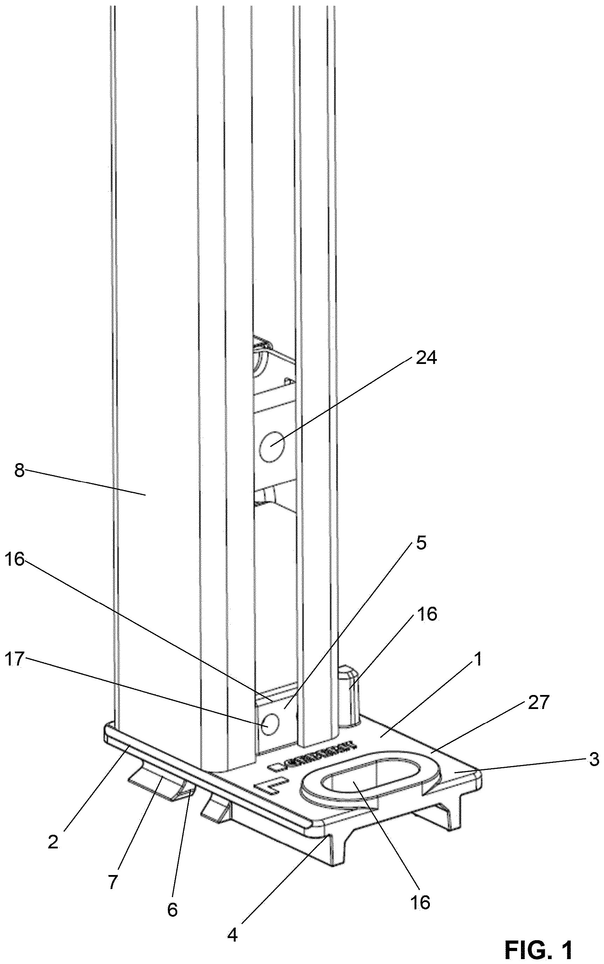

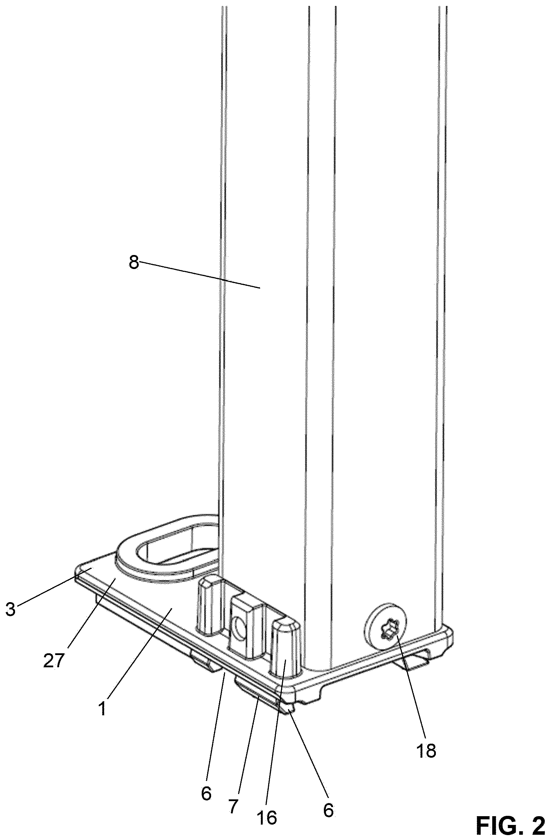

In den Figuren 1 und 2 werden perspektivische Ansichten einer Montageanordnung mit einem erfindungsgemässen Verbindungselement 1 nach einer Ausführungsform der vorliegenden Erfindung. Die Montageanordnung umfasst hier nebst dem Verbindungselement 1 ein Montageelement 8, welches mit dem Verbindungselement 1 in Verbindung steht. Das Montageelement 8 ist hier als Stütze ausgebildet. Die Stütze kann beispielweise Teil eines Montagerahmens sein, an welchem ein Sanitärartikel, wie beispielsweise ein Spülkasten, eine Toilettenschüssel, ein Urinal, ein Waschtisch, etc. befestigt sind. Vorzugsweise umfasst die Stütze Befestigungsstrukturen zur Befestigung des

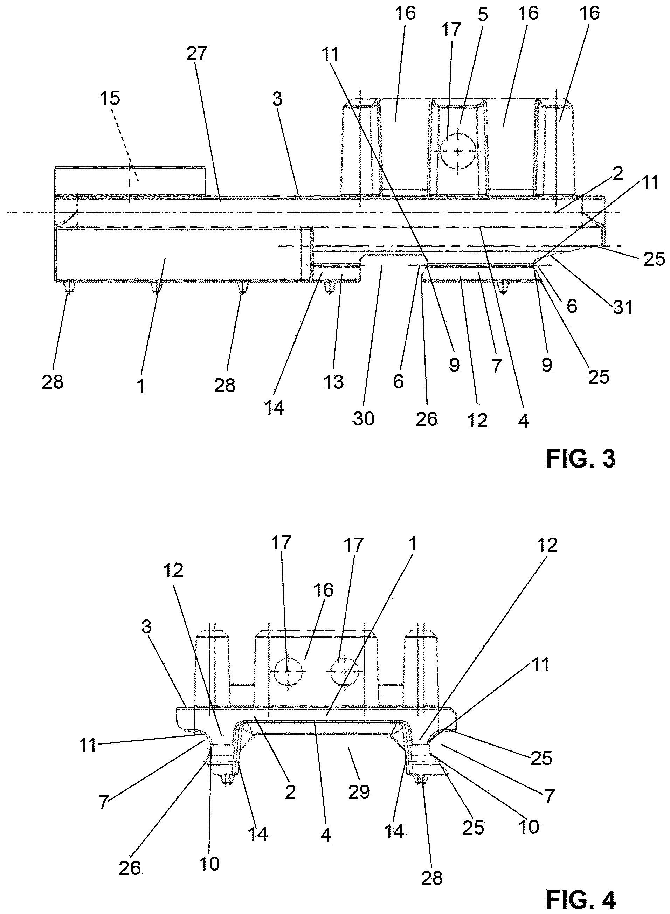

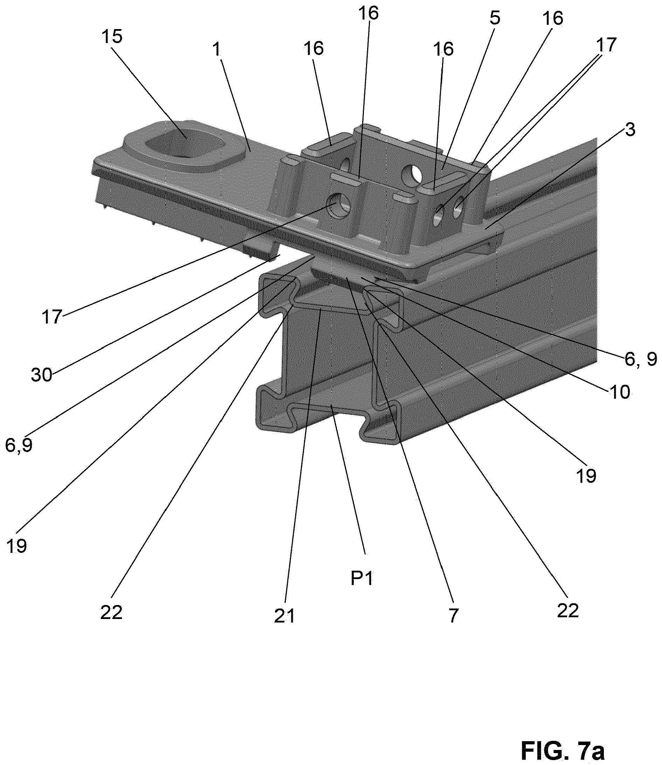

Unter Bezugnahme auf die Figuren 3 bis 6 wird nun das Verbindungselement 1 genauer erläutert. Das Verbindungselement 1 umfasst einen Supportabschnitt 2 mit einer Oberseite 3 und einer Unterseite 4. Die Oberseite 3 und die Unterseite 4 sind hier als parallel zueinander verlaufende Flächen ausgebildet. Das Verbindungselement 1 umfasst weiter einen Verbindungsabschnitt 5, welcher auf der Oberseite 3 am Supportabschnitt 2 angeformt ist. Der Verbindungsabschnitt 5 ist zur Befestigung eines Montageelements 8 am Verbindungselement 1 ausgebildet. Weiter umfasst das Verbindungselement 1 eine erste Raststruktur 6 und eine zweite Raststruktur 7, welche auf der Unterseite 4 am Supportabschnitt 2 angeformt sind. Die erste Raststruktur 6 ist unterschiedlich zur zweiten Raststruktur 7 ausgebildet, derart, dass die erste Raststruktur 6 zur Verbindung mit einem ersten Profilelement P1 und die zweite Raststruktur 7 zur Verbindung mit einem zweiten Profilelement P2 ausgebildet ist. Die Profilelement P1 und P2 sind, wie unten anhand der Figuren 7a bis 8c erläutert werden wird, ebenfalls unterschiedlich zueinander ausgebildet.

In der gezeigten Ausführungsform sind die erste Raststruktur 6 und die zweite Raststruktur 7 so angeordnet, dass das Verbindungselement 1 in einer ersten Orientierung liegt, wenn dieses mit der ersten Raststruktur 6 mit dem ersten Profilelement P1, und dass das Verbindungselement 1 in einer zweiten Orientierung liegt, wenn dieses mit der zweiten Raststruktur 7 mit dem zweiten Profileelement P2 in Verbindung steht. Die erste Orientierung ist dabei bezüglich der Profilachse der jeweiligen Profilelemente unterschiedlich zur zweiten Orientierung. Die Profilachse ist die Mittelachse des jeweiligen Profils.

Die erste Raststruktur 6 umfasst ein Paar von ersten Rastelementen 9. Das heisst, es sind zwei erste Rastelemente 9 angeordnet. Die beiden ersten Rastelemente 9 liegen beabstandet zueinander. Die zweite Raststruktur 7 umfasst ein Paar von zweiten Rastelementen 10. Die beiden zweiten Rastelemente 10 liegen beabstandet zueinander.

In der gezeigten Ausführungsform weist jedes der Rastelemente 9, 10 jeweils eine Rastausnehmung 11 auf. Die Rastausnehmungen 11 der ersten Rastelemente 9 erstrecken sich entlang einer ersten Achse A1. Die Rastausnehmungen 11 der zweiten Rastelemente 10 erstrecken sich entlang einer zweiten Achse A2. Über die Länge der jeweiligen Achse A1, A2 weisen die jeweiligen Rastausnehmungen 11 jeweils einen konstanten Querschnitt auf. Die Querschnitte der Rastausnehmungen 11 können unterschiedlich voneinander sein.

Die beiden Achsen A1, A2 verlaufen in einem Winkel winklig geneigt zueinander. Der Winkel zwischen den beiden Achsen A1, A2 beträgt im vorliegenden Beispiel 90°. Andere Winkel, insbesondere im Bereich von 45° bis 135° sind ebenfalls möglich.

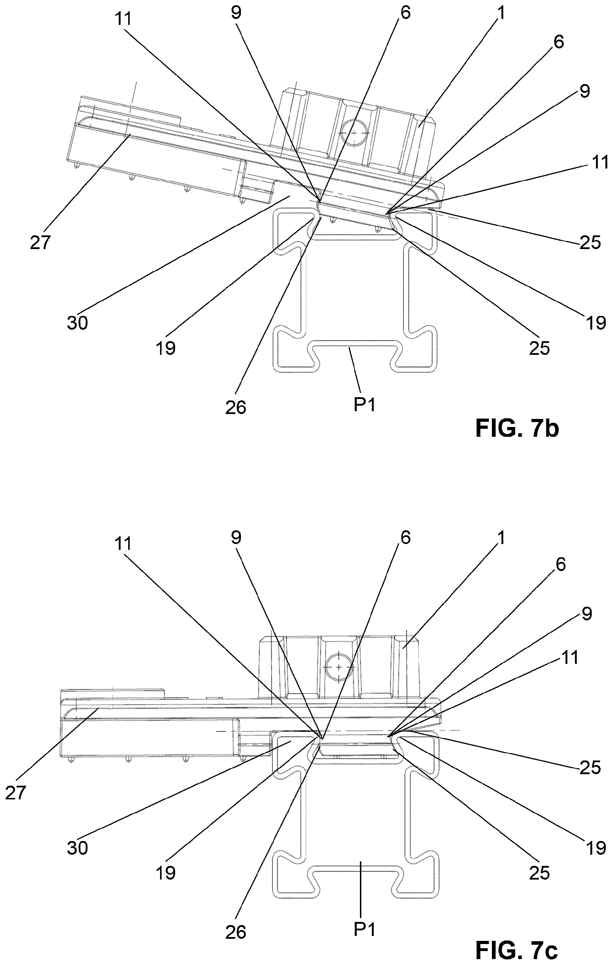

Anhand der Figuren 3 und 7a bis 7c wird nun die Form der ersten Rastelemente 9 der ersten Raststruktur 6 genauer beschrieben. Die beiden ersten Rastelemente 9 weisen, wie erwähnt, je eine Rastausnehmung 11 auf. Beim ersten Rastelemente 9 auf der rechten Seite, schliesst sich der Rastausnehmung sowohl unterseitig wie auch oberseitig ein Führungsabschnitt 25 an. Beim ersten Rastelement 9 auf der linkten Seite, schliesst sich der Rastausnehmung 11 unterseitig eine optionale Rastnase 26 an. Der Führungsabschnitt 25 oberseitig erlaubt die Kontaktierung des ersten Profils P1 vor dem eigentlichen Einrastvorgang. Dies wird in den Figuren 7a und 7b gezeigt. Der Führungsabschnitt 25 unterseitig umgreift eine erste Auskragung 19 des ersten Profils P1. Aus der Position der Figuren 7a und 7b kann das Verbindungselement 1 um die erste Auskragung 19 herum verschwenkt werden, so dass das erste Rastelement 9 auf der linken Seite an einer weiteren ersten Auskragung 19 einrasten kann. Dabei kommt die Rastnase 26 unter die erste Auskragung 19 zu liegen, so dass diese in die Rastausnehmung 11 des ersten Rastelements 9 auf der linken Seite einrastet. Die erfolgte Rastverbindung wird in der Figur 7c gezeigt. Die Rastnase 26 ist wie erwähnt, optional vorgesehen. In anderen Varianten kann auf die Rastnase 26 verzichtet werden.

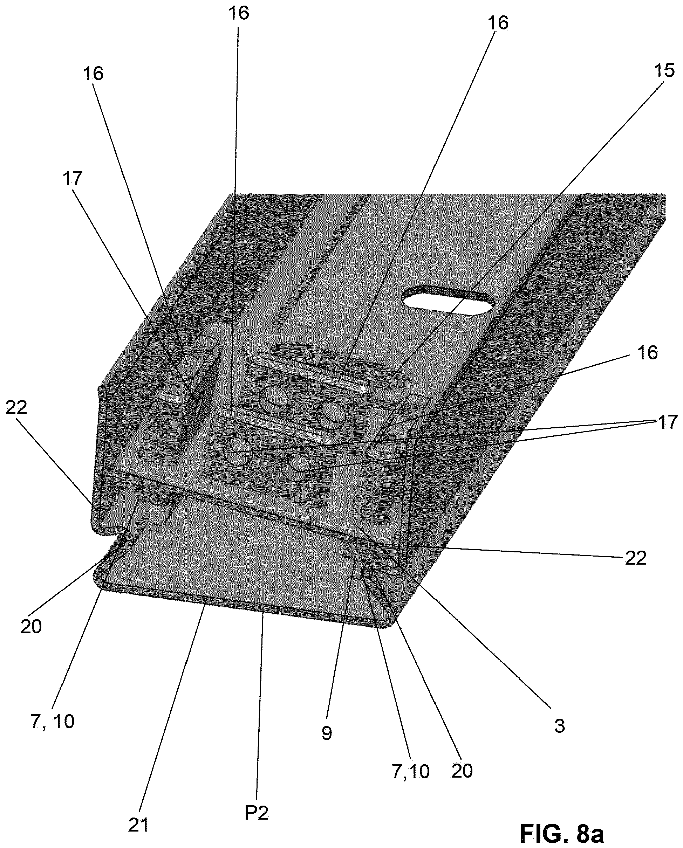

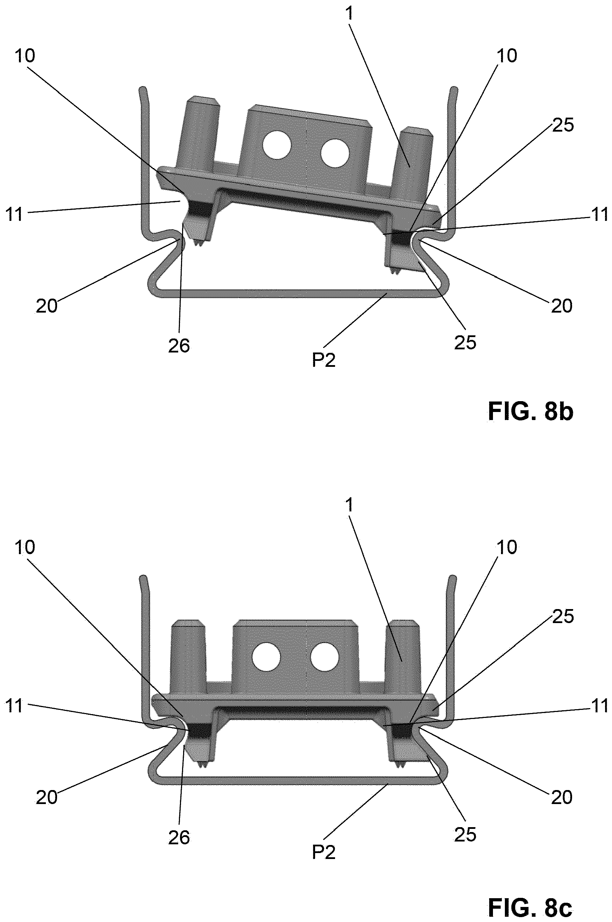

Anhand der Figuren 3 und 7a bis 7c wird nun die Form der zweiten Rastelemente 10 der zweiten Raststruktur 7 genauer beschrieben. Die beiden zweiten Rastelemente 10 weisen, wie erwähnt, je eine Rastausnehmung 11 auf. Beim zweiten Rastelement 10 auf der rechten Seite, schliesst sich der Rastausnehmung sowohl unterseitig wie auch oberseitig ein Führungsabschnitt 25 an. Beim zweiten Rastelement 10 auf der linkten Seite, schliesst sich der Rastausnehmung 11 unterseitig eine Rastnase 26 an. Der Führungsabschnitt 25 oberseitig erlaubt die Kontaktierung des zweiten Profils P2 vor dem eigentlichen Einrastvorgang. Dies wird in den Figuren 8a und 8b gezeigt. Der Führungsabschnitt 25 unterseitig umgreift eine zweite Auskragung 20 des zweiten Profils P2. Aus der Position der Figuren 8a und 8b kann das Verbindungselement 1 um die zweite Auskragung 20 herum verschwenkt werden, so dass das zweite Rastelement 10 auf der linken Seite an einer weiteren zweiten Auskragung 20 einrasten kann. Dabei kommt die Rastnase 26 unter die zweite Auskragung 20 zu liegen, so dass diese in die Rastausnehmung 11 des zweiten Rastelements 10 auf der linken Seite einrastet. Die erfolgte Rastverbindung wird in der Figur 8c gezeigt.

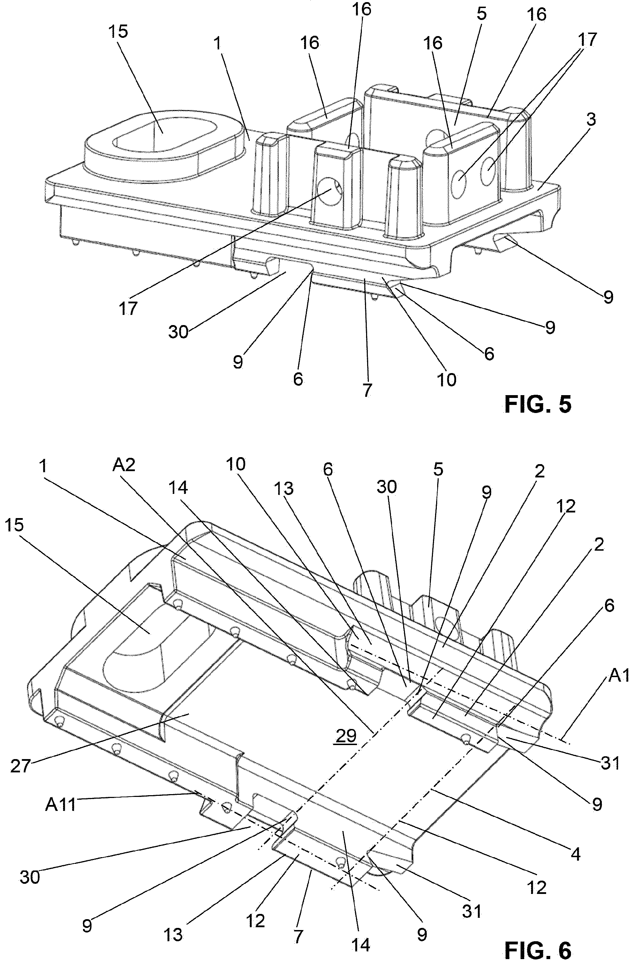

Anhand der perspektivischen Abbildungen der Figuren 5 und 6 werden nun weitere bevorzugte Merkmale des Verbindungselements 1 genauer beschrieben.

Von der Unterseite 4 erstrecken sich zwei beabstandet zueinander liegende und parallel zueinander verlaufende Stege 12 weg. Die Stege 12 weisen jeweils eine Aussenseite 13 und eine Innenseite 14 auf. Die erste Raststruktur 6 und die zweite Raststruktur 7 sind an den Stegen 12 angeordnet.

Die Aussenseiten 13 der beiden Stege 12 sind einander abgewandt sind. Die Innenseiten 14 sind einander zugewandt. Zwischen den beiden Innenseite 14 ist hier ein Zwischenraum 29 angeordnet. Jeweils eines der zweiten Rastelemente 10 liegt an der Aussenseite 13 des jeweiligen Stegs 12.

Jeder der Stege 12 weist mindestens einen sich von der Aussenseite 13 zur Innenseite 14 durch den Steg 12 hindurch erstreckenden Durchbruch 30. Eines der ersten Rastelemente 9 ist im besagten Durchbruch 30 angeordnet. Hier liegt eines der ersten Rastelemente 9 an einer Seitenfläche des Durchbruchs. Weiter weist hier jeder der Stege 12 gegenüber des mindestens einen Durchbruchs 30 eine Stirnseite 31 auf. Eines der ersten Rastelemente 9 an der besagten Stirnseite 31 angeordnet ist.

In der gezeigten Ausführungsform weist jeder der Stege 12 eine Lagerfläche 32 auf, wobei von der Lagerfläche 32 optionale Rastnocken 28 abstehen, und wobei die Lagerfläche 32 bevorzugt parallel zur Unterseite 4 verläuft.

In der gezeigten Ausführungsform weist der Supportabschnitt 2 einen Fortsatz 27 auf, der sich vorzugsweise fluchtend bezüglich der Oberseite 3 und der Unterseite 4 erstreckt. Der Fortsatz 27 schliesst sich dem Bereich des Supportabschnitts 2 an, an welchem der Verbindungsabschnitt 5 und die Raststrukturen 6, 7 angeordnet sind. Der besagte Fortsatz 27 weist mindestens ein sich von der Oberseite 3 zur Unterseite 4 erstreckenden Durchbruch 15 aufweist. Der Durchbruch 15 dient beispielsweise der Aufnahme einer Schraube, welche durch den Durchbruch 15 hindurch geführt werden kann.

Seitlich zum Durchbruch 15 erstrecken sich die Stege 12 seitlich neben dem Durchbruch. Das heisst, dass sich der Durchbruch 15 zwischen den Stegen 12 befindet.

Die beiden genannten Raststrukturen 6, 7 sind bezüglich des Verbindungsabschnitts 5 so angeordnet, dass die Raststrukturen 6, 7 unterhalb des Verbindungsabschnitts 5 liegen. Vorzugsweise weist der Verbindungsabschnitt 5 vier in einem Rechteck angeordnete Verbindungslaschen 16 auf. Die Verbindungslaschen 16 weisen dabei eine Gewindeöffnung 17 auf, in welche eine Befestigungsschraube 18, die durch eine Seitenwand im Montageelement 8 geführt wird, einschraubbar ist.

Jedes der Profile P1, P2 weist einen Basisschenkel 21 auf, von welchem sich zwei Seitenschenkel 22 weg erstrecken. Zwischen den beiden Seitenschenkeln 22 bildet sich ein Zwischenraum 23. Die beiden Seitenschenkel 22 weisen hier je eine Auskragung 19, 20 auf, welche sich in den Zwischenraum hinein erstreckt. Wie oben beschrieben greifen die Auskragungen 19, 20 in die besagten Rastausnehmungen 11 ein. Die Form der ersten Auskragung 19 des ersten Profils P1 ist von der Form der zweiten Auskragung 20 des zweiten Profils P2 unterschiedlich.

### BEZUGSZEICHENLISTE

- 1: Verbindungselement
- 2: Supportabschnitt
- 3: Oberseite
- 4: Unterseite
- 5: Verbindungsabschnitt
- 6: erste Raststruktur
- 7: zweite Raststruktur
- 8: Montageelement
- 9: erste Rastelemente
- 10: zweite Rastelemente
- 11: Rastausnehmung
- 12: Steg
- 13: Aussenseite
- 14: Innenseite
- 15: Durchbruch
- 16: Verbindungslaschen
- 17: Gewindeöffnung
- 18: Befestigungsschraube
- 19: erste Auskragung
- 20: zweite Auskragung
- 21: Basisschenkel
- 22: Seitenschenkel
- 23: Zwischenraum
- 24: Befestigungsstrukturen
- 25: Führungsabschnitt
- 26: Rastnase
- 27: Fortsatz
- 28: Rastnocken
- 29: Zwischenraum
- 30: Durchbruch
- 31: Stirnseite
- 32: Lagerfläche

## Patentansprüche

1. Verbindungselement (1) umfassend
einen Supportabschnitt (2) mit einer Oberseite (3) und einer Unterseite (4),
einen Verbindungsabschnitt (5), welcher auf der Oberseite (3) am Supportabschnitt (2) angeformt ist, und
eine erste Raststruktur (6) und eine zweite Raststruktur (7), welche auf der Unterseite (4) am Supportabschnitt (2) angeformt sind,
wobei der Verbindungsabschnitt (5) zur Befestigung eines Montageelements (8) am Verbindungselement (1) ausgebildet ist, und
wobei die erste Raststruktur (6) unterschiedlich zur zweiten Raststruktur (7) ausgebildet ist, derart, dass die erste Raststruktur (6) zur Verbindung mit einem ersten Profilelement (P1) und die zweite Raststruktur (7) zur Verbindung mit einem zweiten Profilelement (P2) ausgebildet ist.

2. Verbindungselement (1) nach Anspruch 1, **dadurch gekennzeichnet, dass** die erste Raststruktur (6) ein Paar von ersten Rastelementen (9) aufweist, wobei die beiden ersten Rastelemente (9) beabstandet zueinander liegen; und/oder dass die zweite Raststruktur (7) ein Paar von zweiten Rastelementen (10) aufweist, wobei die beiden zweiten Rastelemente (10) beabstandet zueinander liegen.

3. Verbindungselement (1) nach Anspruch 2, **dadurch gekennzeichnet, dass** die ersten Rastelemente (9) und/oder die zweiten Rastelemente (10) mindestens eine Rastausnehmung (11) aufweisen.

4. Verbindungselement (1) nach Anspruch 3, **dadurch gekennzeichnet, dass** sich die Rastausnehmungen (11) der ersten Rastelemente (9) entlang einer ersten Achse (A1) erstrecken und dass sich die Rastausnehmungen (11) der zweiten Rastelemente (10) entlang einer zweiten Achse (A2) erstrecken, wobei die ersten Achsen (A1) in einem Winkel im Bereich von 45° bis 135°, insbesondere in einem Winkel von 90°, zu den zweiten Achsen (A2) verlaufen.

5. Verbindungselement (1) nach einem der vorhergehenden Ansprüche, **dadurch gekennzeichnet, dass** die erste Raststruktur (6) bezüglich der zweiten Raststruktur (7) derart angeordnet ist, dass die Orientierung des Verbindungselements (1) bei der Verbindung mit dem ersten Profileelement (P1) bezüglich einer durch das erste Profilelement (P1) definierten ersten Profilachse (M1) unterschiedlich zur Orientierung des Verbindungselements (1) bei der Verbindung mit dem zweiten Profilelement (P1) bezüglich einer durch das zweite Profilelement (P2) definierten zweiten Profilachse (M2) ist.

6. Verbindungselement (1) nach einem der vorhergehenden Ansprüche, **dadurch gekennzeichnet, dass** sich von der Unterseite (4) zwei beabstandet zueinander liegende und parallel zueinander verlaufende Stege (12) weg erstrecken, wobei die Stege (12) jeweils eine Aussenseite (13) und eine Innenseite (14) aufweisen, und wobei die erste Raststruktur (6) und die zweite Raststruktur (7) an diesen Stegen (12) angeordnet sind.

7. Verbindungselement (1) nach Anspruch 6 und einem der Ansprüche 2 bis 5, **dadurch gekennzeichnet, dass** die Aussenseiten (13) der beiden Stege (12) einander abgewandt sind; und dass jeweils eines der zweiten Rastelemente (10) an der Aussenseite (13) des jeweiligen Stegs (12) liegt; oder dass jeweils eines der zweiten Rastelemente (10) an der Innenseite (14) des jeweiligen Stegs (12) liegt.

8. Verbindungselement (1) nach Anspruch 6 oder 7 und einem der Ansprüche 2 bis 5, **dadurch gekennzeichnet, dass** jeder der Stege (12) mindestens einen sich von der Aussenseite (13) zur Innenseite (14) durch den Steg (12) hindurch erstreckenden Durchbruch (30) aufweist, wobei eines der ersten Rastelemente (9) im besagten Durchbruch (30) angeordnet ist.

9. Verbindungselement (1) nach einem der Ansprüche 6 bis 7 und einem der Ansprüche 2 bis 5, **dadurch gekennzeichnet, dass** jeder der Stege (12) gegenüber des mindestens einen Durchbruchs (30) eine Stirnseite (31) aufweist, wobei eines der ersten Rastelemente (9) an der besagten Stirnseite (31) angeordnet ist.

10. Verbindungselement (1) nach einem der vorhergehenden Ansprüche 6 bis 9, **dadurch gekennzeichnet, dass** jeder der Stege (12) eine Lagerfläche (32) aufweist, wobei von der Lagerfläche (32) optionale Rastnocken (28) abstehen, und wobei die Lagerfläche (32) bevorzugt parallel zur Unterseite (4) verläuft.

11. Verbindungselement (1) nach einem der vorhergehenden Ansprüche, **dadurch gekennzeichnet, dass** der Supportabschnitt (2) einen Fortsatz (27) aufweist, der sich vorzugsweise fluchtend bezüglich der Oberseite (3) und der Unterseite (4) erstreckt, wobei im besagten Fortsatz (27) mindestens ein sich von der Oberseite (3) zur Unterseite (4) erstreckenden Durchbruch (15) aufweist.

12. Verbindungselement (1) nach Anspruch 11, **dadurch gekennzeichnet, dass** sich der Durchbruch (15) zwischen den Stegen (12) befindet.

13. Verbindungselement (1) nach einem der vorhergehenden Ansprüche 11 oder 12, **dadurch gekennzeichnet, dass** der Fortsatz sich seitlich vom Verbindungsabschnitt (5) und von den beiden genannten Raststrukturen (6, 7) weg erstreckt.

14. Verbindungselement (1) nach einem der vorhergehenden Ansprüche, **dadurch gekennzeichnet,**
**dass** die beiden genannten Raststrukturen (6, 7) unterhalb des Verbindungsabschnitts (5) liegen; und/oder
**dass** der Verbindungsabschnitt (5) vier in einem Rechteck angeordnete Verbindungslaschen (16) aufweist; und/oder
**dass** das Verbindungselement (1) einstückig ausgebildet ist, insbesondere, dass die genannten Raststrukturen (6, 7) integral am Supportabschnitt (2) angeformt sind; und/oder
**dass** die genannten Raststrukturen (6, 7) elastisch federnd und/oder plastisch verformbar ausgebildet sind; und/oder
**dass** das Verbindungselement (1) aus einem Kunststoff oder einem Zinkdruckguss besteht, insbesondere dass das Verbindungselement (1) ausschliesslich aus einem Kunststoff oder einem Zinkdruckguss besteht; und/oder
**dass** das Verbindungselement (1) keine beweglichen Teile umfasst.

15. Montageanordnung umfassend ein Verbindungselement (1) nach einem der vorhergehenden Ansprüche und
mindestens ein Profilelement (P1) nach einer ersten Art, wobei das Profilelement mindestens eine erste Auskragung (19) aufweist, wobei das Verbindungselement (1) mit der ersten Raststruktur (6) mit der ersten Auskragung (19) am Profilelement (P1) der ersten Art verrastend verbindbar ist; oder
mindestens ein Profilelement (P2) nach einer zweiten Art, wobei das Profilelement mindestens eine zweite Auskragung (20) aufweist, wobei das Verbindungselement (1) mit der zweiten Raststruktur (7) mit der zweiten Auskragung am Profilelement (P2) der zweiten Art verrastend verbindbar ist.

16. Montageanordnung nach Anspruch 15, **dadurch gekennzeichnet, dass** jedes der Profile (P1, P2) einen Basisschenkel (21) und zwei beabstandet zueinander liegende Seitenschenkel (22), die vom Basisschenkel (21) abstehen, aufweist, wobei jeweils eine der jeweiligen Auskragung (19, 20) an jedem der Seitenschenkel angeordnet ist und wobei die Auskragungen (19, 20) in den Zwischenraum (23) zwischen den Seitenschenkeln (22) einragen.

17. Montageanordnung nach einem der Ansprüche 15 oder 16, **dadurch gekennzeichnet, dass** die erste Auskragung (19) von der zweiten Auskragung (20) unterschiedlich ist.

18. Montageanordnung nach einem der Ansprüche 15 bis 17, **dadurch gekennzeichnet, dass** die Montageanordnung weiterhin ein Montageelement (8) umfasst, welches mit dem Verbindungsabschnitt (5) in Verbindung steht, wobei das Montageelement (8) vorzugsweise als Stütze ausgebildet ist, und wobei das Montageelement (8) vorzugsweise Befestigungsstrukturen (24) zur Befestigung von mindestens einem Sanitärartikel aufweist.
